Europäisches Patentamt

European Patent Office

Office européen des brevets

(19)

(11) Numéro de publication: **0 010 490**
**B1**

(12) **FASCICULE DE BREVET EUROPEEN**

(45) Date de publication du fascicule du brevet: **22.12.82**

(21) Numéro de dépôt: **79400742.7**

(22) Date de dépôt: **12.10.79**

(51) Int. Cl.³: **B 29 D 31/00,**
**B 29 D 23/04, E 06 B 9/14,**
**F 16 L 11/00**

(54) Tubes, tuyaux et profilés creux en matière plastique, procédé et outil pour leur fabrication.

(30) Priorité: **16.10.78 FR 7830128**
**10.09.79 FR 7923162**

(43) Date de publication de la demande:
**30.04.80 Bulletin 80/9**

(45) Mention de la délivrance du brevet:
**22.12.82 Bulletin 82/51**

(84) Etats contractants désignés:
**AT BE CH DE GB IT LU NL SE**

(56) Documents cités:
**DE - A - 2 613 386**
**DE - B - 1 190 271**
**DE - B - 1 245 582**
**FR - A - 2 173 835**
**FR - A - 2 208 848**
**FR - A - 2 297 128**
**FR - A - 2 344 397**
**GB - A - 1 516 262**
**US - A - 3 379 221**

(73) Titulaire: **Kuster, René**
**7, rue de Belfort**
**F-68720 Heimsbrunn (FR)**

(72) Inventeur: **Kuster, René**
**7, rue de Belfort**
**F-68720 Heimsbrunn (FR)**

(74) Mandataire: **Aubertin, François et al,**
**Cabinet Bugnion Associes S.A.R.L. 4, rue de**
**Haguenau**
**F-67000 Strasbourg (FR)**

Courier Press, Leamington Spa, England.

Tubes, tuyaux et profilés creux en matière plastique, procédé et outil pour leur fabrication

L'invention concerne, d'une part, des tubes, tuyaux, profilés creux et analogues en matière plastique obtenus par extrusion et, d'autre part, un dispositif pour la réalisation de ces produits.

Pour la fabrication de tubes, tuyaux et profilés creux en matière plastique, en particulier en polyéthylène, en polypropylène, en polychlorure de vinyle, en caoutchouc et autres, on utilise principalement le procédé dit procédé d'extrusion. On introduit des granulés de matière plastique dans une installation d'extrusion composée essentiellement d'une extrudeuse, éventuellement d'un conformateur, d'un bac de refroidissement, d'un banc de tirage et d'un système enrouleur. Les tubes, tuyaux, profilés creux et analogues obtenus par l'intermédiaire de cette installation d'extrusion comportent une paroi pleine nécessitant une quantité donnée desdits granulés de matière plastique constituant un des paramètres pour déterminer le prix de revient.

Par suite problèmes économiques, il est souhaitable d'obtenir avec la même quantité de granulés une augmentation du volume des produits extrudés.

Selon le procédé d'extrusion connu, le tube, tuyau, profilé creux extrudé en matière plastique sortent de la tête d'extrusion entre la filière et le poinçon. Leur paroi est pleine et massive quelle que soit l'épaisseur. Ces produits extrudés acquièrent leur calibre définitif, intérieur et/ou extérieur, en passant sur le conformateur ou dispositif de calibrage tant qu'ils sont encore mous et plastiques.

Pour obtenir ces canaux creux réalisés dans la paroi des produits extrudés, il est donc nécessaire de maintenir ces canaux ouverts jusqu'au refroidissement complet du produit extrudé et éviter que ces canaux ne se referment en se soudant.

On connaît déjà, par FR - A - 2 297 128, une extrudeuse munie d'une filière annulaire caractérisée en ce qu'elle comprend, entre la paroi extérieure du noyau et la paroi intérieure de l'enveloppe dans la zone comprise entre deux broches adjacentes, des moyens permettant de régler le passage de matières synthétiques, une rangée de broches étant disposée concentriquement par rapport au noyau et à l'enveloppe.

On connaît également, par FR - A - 2 344 397, une filière pour l'extrusion d'éléments tubulaires creux en matière plastique, caractérisée par le fait qu'elle comprend un mandrin et une matrice associables à une tête d'extrusion et définissant dans leur zone de jonction un canal à pourtour fermé en communication avec une conduite d'amenée ou d'admission de la matière plastique à extruder, dans ledit canal étant prévus une multiplicité d'appendices profilés, fixés audit mandrin, placés côte à côte les uns des autres et disposés sur tout le pourtour dudit canal, lesdits appendices définissant en coopération avec ladite matrice une multiplicité de bouches d'extrusion, à l'intérieur dudit mandrin étant prévue une conduite à pourtour fermé en communication avec une conduite débouchant dans l'atmosphère et avec une multiplicité de minuscules canaux dont chacun s'étend dans l'un desdits appendices et débouche dans l'une desdites bouches d'extrusion.

On connaît également, par DE—B 1.245.582, une tête de filière comportant des calibreurs satellites maintenant les canaux ouverts depuis la sortie du produit de la tête de filière jusqu'à durcissement total dudit produit extrudé.

Toutefois, cette tête de filière ne peut être utilisée que pour une mousse de plastique et non pas pour du polypropylène soumis à un effet de "Swelling ratio". En effet, pour des produits extrudés conformes à l'invention, il se créé une zone de déformation des produits extrudés, zone située entre le chant de sortie de la tête de la filière et le chant d'entrée du conformateur nécessaire soit pour un calibrage intérieur, soit pour un calibrage extérieur desdits produits extrudés.

La présente invention a pour but d'apporter un remède à cette difficulté et de fournir une filière permettant l'extrusion d'un profilé creux en polypropylène.

L'invention concerne un dispositif pour le formage de tubes, tuyaux, profilés creux et analogues en matière plastique, notamment en polypropylène, obtenus par extrusion et présentant une paroi pourvue de canaux creux de section quelconque parallèles à l'axe longitudinal des dits produits extrudés, ces canaux étant obtenus à la sortie de la tête d'extrusion et maintenus ouverts durant la phase de refroidissement et présentant, répartis sur la surface interne de la tête d'extrusion, des poinçons satellites disposés entre le poinçon central et la filière et aboutant à des calibreurs satellites maintenant les canaux ouverts depuis la sortie du produit de la tête d'extrusion jusqu'au durcissement total dudit produit extrudé caractérisé en ce que les calibreurs satellites sont des éléments souples s'adaptant aux déformations que subit le produit extrudé entre le chant de sortie de le tête d'extrusion et le chant d'entrée du conformateur.

Dans ce qui suit, l'invention est exposée plus en détail à l'aide de dessins représentant seulement des modes d'exécution.

La figure 1 est une vue en coupe en élévation de l'extrémité du dispositif permettant la réalisation de produits extrudés à paroi creuse selon le procédé conforme de l'invention.

Les figures 2 à 7 sont des vues en coupe de produits extrudés conformes à l'invention.

Les figures 8 à 10 sont des vues en perspective de produits obtenus.

La figure 11 est une vue en plan du conformateur, le couvercle étant enlevé.

La figure 12 est une vue en coupe longitudinale du conformateur selon ligne de coupe XII—XII de la figure 11.

La figure 13 est une vue en coupe transversale du conformateur à proximité de son entrée, vue selon ligne de coupe XIII—XIII de la figure 11.

La figure 14 est une vue en coupe transversale du conformateur à hauteur de l'amorce de la réalisation de la charnière, vue selon ligne de coupe XIV—XIV de la figure 11.

La figure 15 est une vue en coupe transversale du conformateur, vue selon ligne de coupe XV—XV de la figure 11.

La figure 16 est une vue en coupe transversale du conformateur à proximité de sa sortie, vue selon ligne de coupe XVI—XVI de la figure 11.

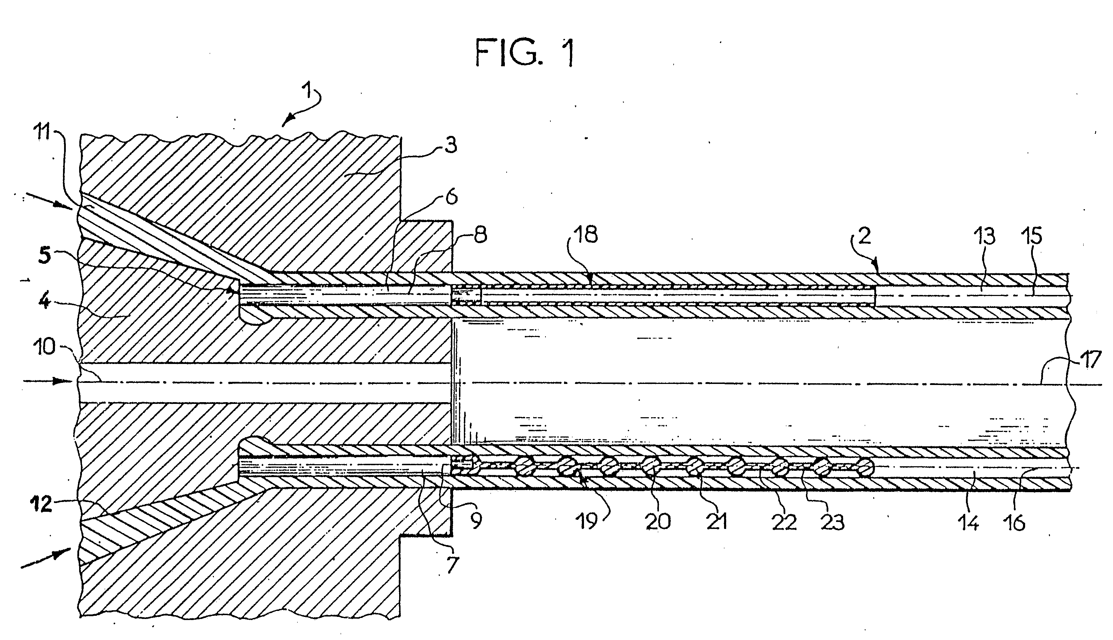

On se réfère à la figure 1.

Le dispositif 1 permettant la réalisation des tubes, tuyaux, profilés creux et analogues 2 en matière plastique, notamment en polypropylène, est une tête d'extrusion composée d'une filière 3 et d'un poinçon central 4. La surface intérieure 5 du poinçon central 4 comporte une pluralité de poinçon satellites 6, 7 dont l'axe longitudinal 8, 9 est parallèle à l'axe longitudinal 10 du poinçon central 4. .

Le produit en fusion 11 s'écoule à travers les nervures 12 et enrobe les poinçons satellites 6, 7. En fonction de la section des poinçons satellites 6, 7 ainsi que de leur nombre, le produit extrudé 2 comporte des canaux creux 13, 14 dont l'axe longitudinal 15, 16 est parallèle à l'axe longitudinal 17 du produit extrudé 2.

Le produit extrudé 2 sortant de la tête d'extrusion est encore mou et plastique. De ce fait, il y a risque que les canaux creux 13, 14, réalisés par l'intermédiaire des poinçons satellites 6, 7, se referment en se soudant. Pour annihiler ce risque, on pourvoit les poinçons satellites 6, 7 de calibreurs satellites 18, 19 de longueur telle que le produit extrudé 2, après passage du conformateur (non représenté), soit entièrement refroidi et dur. Ces calibreurs satellites 18, 19 aboutent avec les poinçons satellites 6, 7.

Du fait qu'il y a gonflement de la matière à la sortie de la tête d'extrusion, le produit extrudé ne présente pas un plan rectiligne mais est légèrement conique. Par ailleurs, le produit extrudé est soumis à une certaine déformation et il s'avère donc nécessaire que les poinçons satellites 6, 7 suivent les fluctuations du produit extrudé. A cet effet, selon un premier mode de réalisation, ces calibreurs satellites 18, 19 sont des fils ou des tuyaux en matière plastique souple ou, selon un second mode de réalisation, ces calibreurs satellites 19 sont constitués de billes, de boules ou d'éléments cylindriques 20, 21 montés en chapelet et reliés par des fils ou des chaînettes 22, 23. En raison de leur souplesse ou de leur articulation, les calibreurs satellites 18, 19 épousent les déformations et changements dimensionnels du produit extrudé entre la sortie de·la tête d'extrusion et l'entrée dans le dispositif de calibrage extérieur ou sur le dispositif de calibrage intérieur tout en étayant les canaux creux 13, 14.

Toutefois, ces calibreurs satellites 18, 19 ne doivent pas constituer un frein pour le déplacement du produit extrudé 2. A cet effet, les calibreurs satellites 18, 19 sont réalisés en matière plastique très lisse et non adhérente tel que le polytétrafluoréthylène. Bien entendu, la section et le nombre des calibreurs satellites 18, 19 et des poinçons satellites 6, 7 sont conformes à la section et au nombre de canaux creux 13, 14 que l'on veut obtenir. Il est certain que ces canaux ne doivent pas affaiblir la résistance à l'écrasement du produit final.

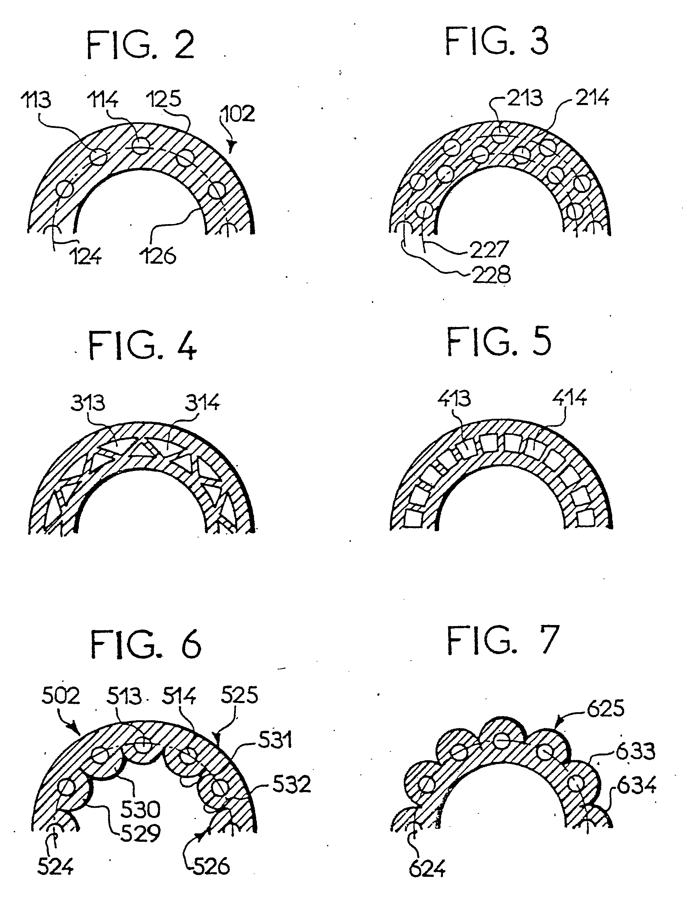

On se réfère aux figures 2 à 7.

Ces figures présentent, à titre d'exemple non limitatif, la section d'un tube extrudé présentant les canaux creux conformément à l'invention. Ainsi, comme visible dans la figure 2, les différents canaux 113, 114 sont disposés sur un cercle 124 concentrique au pourtour extérieur 125 et au pourtour intérieur 126 du tube extrudé 102. Selon un autre mode de réalisation, les différents canaux 213, 214 sont disposés en quinconce sur deux cercles 227, 228 (voir figure 3). Les différents canaux creux 113, 114 et 213, 214 ont une section ronde. Toutefois, cette section peut être quelconque. Dans la figure 4, les canaux creux 313, 314 ont une section triangulaire alors que les canaux creux 413, 414, tels que visibles dans la figure 5, ont une section trapézoïdale.

On décrira ci-dessous quelques éxécutions particulières dans le cadre de l'invention.

Les mandrins habituels, utilisés pour les bobines de papier, films plastiques, bandes de tissu et autres, sont faits de bandes de papier enroulées et collées pour former une certaine épaisseur de paroi et avoir ainsi une résistance suffisante à l'écrasement. Jusqu'à présent, il n'était pas facile de remplacer le mandrin en carton par des mandrins en matière plastique extrudés. En effet, ces derniers ont une surface intérieure plus dure et plus lisse et glissante. De ce fait, il y aurait glissement du mandrin en matière plastique sur les broches extensibles ou sur les cônes de fixation pendant l'enroulage ou le déroulage de la bobine de papier sur machine.

La présente invention permet le remplacement des mandrins en carton par des mandrins en matière plastique. Il suffit que le cercle concentrique 524 soit plus près du pourtour intérieur 526 que du pourtour extérieur 525 du tube extrudé 502. De ce fait, les canaux creux 513, 514 permettront d'obtenir sur le pourtour intérieur 526 des bossages longitudinaux 529, 530 ayant la forme de petits tubes en saillie. Dans ce cas, le poinçon central (non représenté, mais visible dans la figure 1)

est cannelé. La pression de la broche extensible enfoncera progressivement les sommets saillants 531, 532 de ces bossages semi-cylindriques 529, 530 en provoquant un écrasement des canaux creux 513, 514. Toutefois, cette pression provoquera une contrepression de plus en plus forte au-fur-et-à-mesure de l'augmentation de la pression. Le tube-mandrin, et par voie de conséquence, la bobine qu'il porte seront ainsi fortement bloqués sur la broche et ne pourront ni tourner, ni glisser sur celle-ci. De même, pour les cônes de fixation enfoncés dans chaque bout du mandrin, leur surface de contact et de pression sera plus importante à l'intérieur du mandrin, grâce à cette même élasticité s'adaptant à leur conicité.

Par ailleurs, les tubes et les tuyaux sont stockés en forme de couronnes. Toutefois, du fait que la matière est très lisse, les différentes spires de cette couronne ont tendance à glisser les unes sur les autres, ce qui rend difficile le stockage desdits tubes et/ou tuyaux.

Selon un mode de réalisation de l'invention, on rapproche le cercle concentrique 624 du pourtour extérieur 625. De ce fait, on obtient un tube ou un tuyau à l'intérieur lisse mais à l'extérieur strié dont les stries élastiques sont formées par des bossages semi-cylindriques 633, 634 faisant saillies par rapport au pourtour extérieur 625 (voir figure 7). Pour obtenir ce résultat, il suffit de rapprocher les poinçons satellites de la filière elle-même cannelée. La préhension du tuyau est ainsi facilitée, même si la matière est très lisse.

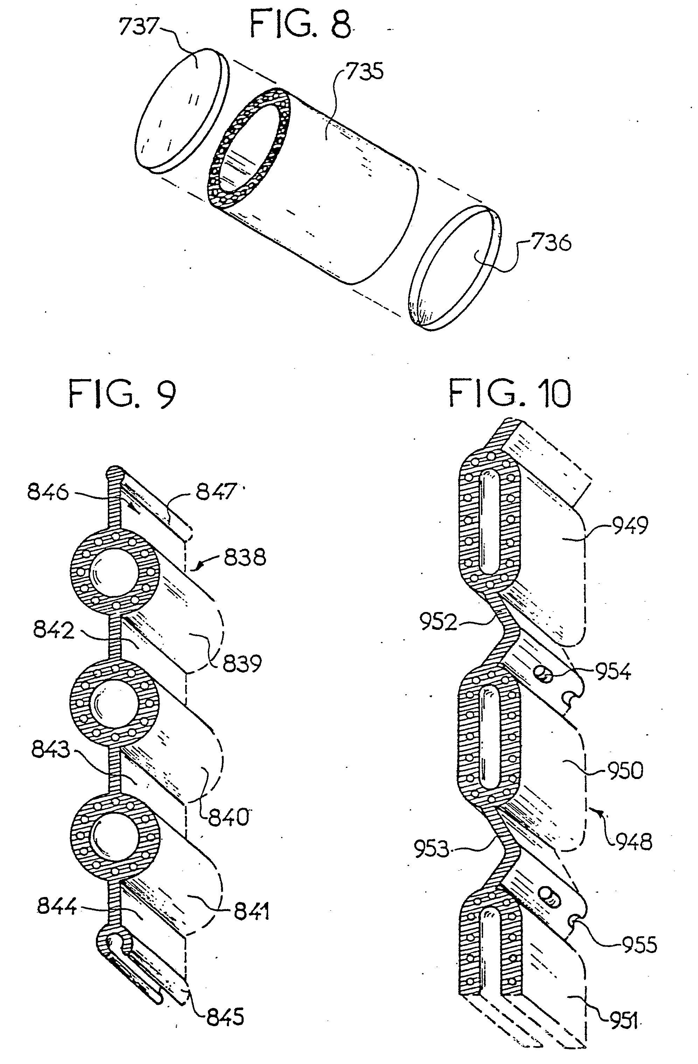

Un gros tube extrudé, avec paroi creuse conforme à l'invention, tronçonné en longueur déterminée en fonction de la capacité à obtenir, permet de réaliser des fûts et/ou des emballages cylindriques 735. Il suffit de fermer ce tronçon de tube par un fond 736 et un couvercle rapportés 737 (voir figure 8).

Bien entendu, la filière peut avoir une forme quelconque. Ainsi, comme visible dans la figure 9, on peut réaliser des claies et/ou des palissades 838. Ces claies 838 sont constituées d'éléments tubulaires parallèles 839, 840, 841 reliés entre eux par une entretoise souple 842, 843. Pour relier entre elles plusieurs claies, on peut pourvoir l'un des chants longitudinaux 844 d'un profilé femelle 845 alors que l'autre chant longitudinal 846 comporte une languette à rebord en forme de jonc 847.

On peut obtenir, par application de la présente invention, des tabliers de volets roulants 948. Dans ce cas, les différents éléments tubulaires parallèles 949, 950, 951 sont reliés par des languettes souples 952, 953 formant charnières. Dans ces languettes 952, 953, on peut prévoir des trous et/ou des fentes 954, 955, afin de laisser passer ou non air et lumière suivant que le volet sera tendu ou tassé sur lui-même par son propre poids (voir figure 10).

Dans la description ci-dessus, les calibreurs satellites souples 18, 19 sont disposés concentriquement. Les canaux creux 13, 14 sont maintenus ouverts, après la sortie de la filière, jusqu'au refroidissement suffisant de la matière à l'aide des calibreurs souples. Ces calibreurs intérieurs, sous forme de tuyaux souples, de section ronde ou polygonale, prolongent les poinçons satellites hors de la filière au moins pendant le passage dans le conformateur. Ils sont faits dans une matière très lisse et non adhérente, telle que les plastiques polyfluorés, soit uniquement, soit avec une chemise intérieure d'une autre matière souple.

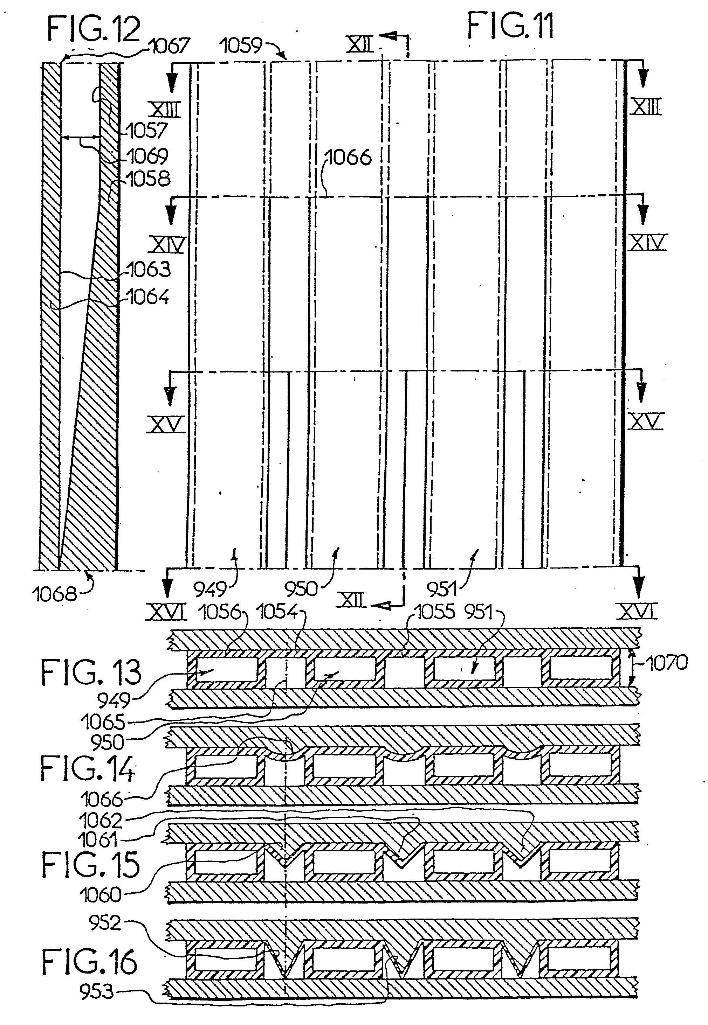

Selon au autre mode de réalisation, représenté dans les figures 11 à 16, les calibreurs satellites souples 18, 19 sont disposés parallèlement dans un même plan. De ce fait, on obtient dans la paroi 1070 des canaux parallèles 949, 950, 951. Les languettes 1054, 1055 de la paroi 1070 situées entre deux canaux parallèles 949, 950 peuvent constituer une charnière et la paroi 1070 peut être utilisée en tant que tablier monobloc.

A la sortie desdits calibreurs satellites souples 18, 19, la languette 1054, 1055 unissant les canaux parallèles 949, 950, 951 est droite. Il est nécessaire, dans le cas du polypropylène, que cette languette 1054, 1055 soit amincie à environ 0,2 à 0,3 millimètres d'épaisseur pour pouvoir faire fonction de charnière.

A cet effet, la face interne longitudinale 1057 du couvercle 1058 du conformateur 1059 comporte des saillies longitudinales 1060, 1061, 1062. Ces saillies longitudinales 1060, 1061, 1062 sont dirigées vers la face interne 1063 du fond 1064 du conformateur 1059 et sont disposées sur l'axe médian 1065 séparant deux canaux tubulaires parallèles juxtaposés 949, 950.

L'amorce 1066 de ces saillies 1060, 1061, 1062 est située à proximité de l'entrée 1067 du conformateur 1059. Ces saillies s'accentuent progressivement vers la sortie 1068 du conformateur 1059 de sorte que les languettes de jonction 1054, 1055 sont peu à peu étirées et donc amincies jusqu'à former un pli en V dont la profondeur est égale à l'espace 1069 situè entre le couvercle 1058 et le fond 1064 du conformateur 1059, cest espace 1069 étant fonction de la paroi 1070.

Les différentes phases de la formation des charnières sont particulièrement visibles dans les figures 13 à 16.

Bien entendu, l'utilisation d'un tablier monobloc n'est pas limitée à celle d'une tablier de volet roulant mais le tablier monobloc peut également servir en tant qu'échangeurs thermiques, absorbeurs de capteurs solaires, radiateurs et autres.

## Revendications

1. Dispositif pour le formage de tubes, tuyaux, profilés creux et analogues (2) en matière plastique, notamment en polypropylène, obtenus par extrusion et présentant une paroi pourvue de canaux creux (13, 14) de section quelconque parallèles à l'axe longitudinal (17) desdits produits extrudés (2), ces canaux (13, 14) étant obtenus à la sortie de la tête d'extrusion (1) et maintenus ouverts durant la phase de refroidissement et présentant, répartis sur la surface interne de la tête d'extrusion (1), des poinçons satellites (6, 7) disposés entre le poinçon central (4) et la filière (3) et aboutant à des calibreurs satellites (18, 19) maintenant les canaux (13, 14) ouverts depuis la sortie du produit de la tête d'extrusion (1) jusqu'au durcissement total dudit produit extrudé (2), caractérisé en ce que les calibreurs satellites (18, 19) sont des éléments souples s'adaptant aux déformations que subit le produit extrudé entre le chant de sortie de la tête d'extrusion (1) et le chant d'entrée (1067) du conformateur (1059).

2. Dispositif selon la revendication 1, caractérisé en ce que les éléments souples (18, 19) sont des fils, des tuyaux en matière plastique souple, des billes, des boules, des éléments cylindriques, montés en chapelet et reliés par des fils, des chaînettes (20, 21, 22, 23) pour conférer auxdits calibreurs (18, 19) une certaine souplesse ou articulation.

3. Dispositif selon la revendication 1, caractérisé en ce que les calibreurs satellites (18, 19) sont réalisés en matière plastique très lisse et non adhérente tel que le polytétrafluoréthylène pour éviter tout freinage de l'avance du produit extrudé (2).

4. Dispositif selon la revendication 1, caractérisé en ce que le couvercle (1058) du conformateur (1059) disposé à la sortie de la tête d'extrusion (1) comporte sur sa face interne longitudinale (1057) des saillies longitudinales (1060, 1061, 1062) situées entre des canaux parallèles (949, 950, 951) s'amorçant à proximité de l'entrée (1067) du conformateur (1059) et s'accentuant progressivement vers sa sortie (1068).

5. Dispositif selon la revendication 1, caractérisé en ce que les poinçons satellites (6, 7) sont disposés sur au moins un cercle concentrique (524) par rapport au poinçon central (4) et à la filière (3) mais plus près du poinçon central (4).

6. Dispositif selon la revendication 1, caractérisé en ce que le poinçon central (4) comporte des cannelures coopérant avec des poinçons satellites (6, 7) désaxés pour obtenir sur le pourtour intérieur (526) du produit extrudé (502) des bossages longitudinaux creux (529, 530) faisant saillies par rapport audit pourtour intérieur (526).

7. Dispositif selon la revendication 1, caractérisé en ce que les poinçons satellites (6, 7) sont disposés sur au moins un cercle concentrique (624) par rapport au poinçon central (4) et à la filière (3) mais plus près de la filière (3).

8. Dispositif selon la revendication 1, caractérisé en ce que la filière (3) comporte des cannelures coopérant avec les poinçons satellites désaxés (6, 7) pour obtenir sur le pourtour extérieur (625) du produit extrudé (602) les stries élastiques longitudinales (633, 634).

9. Profilés creux et analogues en matière plastique, et notamment en polypropylène, obtenus par extrusion à l'aide du dispositif selon une des revendications 1 à 3, caractérisés en ce qu'ils comportent plusieurs éléments tubulaires parallèles (839, 840, 841) reliés entre eux par des languettes souples formant charnières (842, 843, 844) pour la réalisation d'un tablier.

10. Profilés creux et analogues en matière plastique et, notamment en polypropylène, obtenus par extrusion à l'aide du dispositif selon une des revendications 1 à 4, caractérisé en ce qu'ils comportent une paroi (1070) présentant des canaux parallèles (949, 950, 951) disposés dans un même plan et que les languettes (1054, 1055) de cette paroi (1070) situées entre ces canaux parallèles (949, 950, 951) constituent les charnières.

11. Profilés creux et analogues selon la revendication 10, caractérisé en ce que les charnières (952, 953) comportent des orifices (954, 955) pour laisser ou non l'air et/ou la lumière selon que les charnières (952, 953) sont ouvertes ou fermées.

12. Profilés creux et analogues selon la revendication 10, caractérisés en ce que le tablier est un tablier monobloc dont les éléments tubulaires parallèles (949, 950, 951) sont reliés entre eux par des charnières (952, 953) de même matière plastique, le tablier monobloc étant obtenu par extrusion puis étirage en V des charnières (952, 953).

Claims

1. Device for the forming of tubes, hoses, hollow, shaped pieces and the like (2) in plastic material, particularly in polypropylene, obtained by extrusion and having a wall provided with hollow channels (13, 14) of any cross-section, parallel to the longitudinal axis (17) of the said extruded products (2), these channels (13, 14) being obtained to the outlet of the extrusion head (1) and maintained open during the step of cooling and having, distributed on the internal surface of the extrusion head (1), satellite punches (6, 7) disposed between the central punch (4) and the die (3) and jointing the calibrators (18, 19) maintaining the channels (13, 14) open since the outlet of the product of the extrusion head (1) until the total hardening of the said extruded products (2), characterized in that the satellite calibrators (18, 19) are flexible elements suiting to the deformations that the extruded products undergo between the outlet edge of the extrusion head (1) and the inlet edge (1067) of the conformator (1059).

9      **0 010 490**      10

2. Device according to claim 1, characterized in that the flexible elements (18, 19) are wires, hoses in flexible plastic material, balls, cylindrical elements, mounted as a chaplet and connected by wires, small chains (20, 21, 22, 23) for confering to the said calibrators (18, 19) a certain flexibility or articulation.

3. Device according to claim 1, characterized in that the satellite calibrators (18, 19) are realized in a very smooth and non-adherent plastic material such as the polytetrafluoroethylene in order to avoid every braking of the advance of the extruded product (2).

4. Device according to claim 1, characterized in that the cover (1058) of the conformator (1059) disposed to the outlet of the extrusion head (1) comprises, on its longitudinal internal side (1057), longitudinal protrusions (1060, 1061, 1062) situated between the parallel channels (949, 950, 951) beginning close by the inlet (1067) of the conformator (1059) and progressively increasing toward its outlet (1068).

5. Device according to claim 1, characterized in that the satellite punches (6, 7) are disposed on at least a concentric circle (524) with regard to the central punch (4) and the die (3), but nearer the central punch (4).

6. Device according to claim 1, characterized in that the central punch (4) comprises grooves co-operating with the eccentric satellite punches (6, 7) in order to obtain, on the internal periphery (526) of the extruded product (502), hollow longitudinal embossings (529, 530) projecting with regard to the internal periphery (526).

7. Device according to claim 1, characterized in that the satellite punches (6, 7) are disposed on at least a concentric circle (524) with regard to the central punch (4) and the die (3), but nearer the die (3).

8. Device according to claim 1, characterized in that the die (3) comprises grooves co-operating with the eccentric satellite punches (6, 7) in order to obtain, on the internal periphery (625) of the extruded product (602), the longitudinal resilient scratches (633, 634).

9. Hollow shaped pieces and the like in plastic material, particularly in polypropylene, obtained by extrusion by means of the device according to any of the claims 1 to 3, characterized in that they comprise several parallel tubular elements (839, 840, 841) connected among themselves by flexible small tongues forming hinges (842, 843, 844) for the realization of an apron.

10. Hollow shaped pieces and the like in plastic material, particularly in polypropylene, obtained by extrusion by means of the device according to any of the claims 1 to 4, characterized in that they comprise a wall (1070) having parallel channels (949, 950, 951) disposed in a same plan and that the small tongues (1054, 1055) of this wall (1070) situated between these parallel channels (949, 950, 951) constitute the hinges.

11. Hollow shaped pieces and the like according to claim 10, characterized in that the hinges (952, 953) comprise openings (954, 955) to let pass or no the air and/or the light according as the hinges (952, 953) are open or closed.

12. Hollow shaped pieces and the like according to claim 10, characterized in that the apron is made in one piece the parallel tubular elements (949, 950, 951) of which are connected among themselves by the hinges (952, 953) of the same plastic material, the apron made in one piece being obtained by extrusion, then drawing in V of the hinges (952, 953).

Patentansprüche

1. Vorrichtung zum Formen von Rohren, Schläuchen, Hohlprofilen und dergleichen (2) aus Kunststoff, insbesondere Polypropylen, die durch Extrusion erhalten werden und eine Wand mit Hohlkanälen (13, 14) von beliebigem Querschnitt aufweisen, die parallel zu der Längsachse (17) der besagten extrudierten Produkte (2) verlaufen, wobei diese Kanäle (13, 14) am Ausgang des Extrusionskopfes (1) erhalten werden und während der Abkühlphase offengehalten werden und, verteilt über die innere Fläche des Extrusionskopfes (1), Stellitenstempel (6, 7) aufweisen, die zwischen dem zentralen Stempel (4) und dem Mündstück (3) angeordnet sind und in Satellitenkalibriervorrichtungen (18, 19) übergehen, die die Kanäle (13, 14) von dem Austreten des Produktes aus dem Extrusionskopf (1) bis zur vollständigen Aushärtung des besagten extrudierten Produktes (2) offenhalten, dadurch gekennzeichnet, dass die Satelliten-kalibriervorrichtungen (18, 19) nachgiebige Elemente sind, die sich an die Verformungen anpassen, die bei dem extrudierten Produkt zwischen der Ausgangskante des Extrusionskopfes (1) und der Eingangskante (1067) der Abkühlvorrichtung (1059) auftreten.

2. Vorrichtung gemäss Patentanspruch 1, dadurch gekennzeichnet, dass die nachgiebigen Elemente (18, 19) Drähte, Schläuche aus nachgiebigem Kunststoff, Kugeln oder zylindrische Elemente sind, die perlenschnurartig montiert und durch Drähte oder Kettchen (20, 21, 22, 23) miteinander verbunden sind, um den besagten Kalibriervorrichtungen (18, 19) eine gewisse Nachgiebigkeit und gelenkartige Beweglichkeit zu verleihen.

3. Vorrichtung gemäss Patentanspruch 1, dadurch gekennzeichnet, dass die Satellitenkalibriervorrichtungen (18, 19) aus sehr glattem und nicht anhaftenden Kunststoff, wie zum Beispiel Polytetrafluoräthylen verwirklicht sind, um jegliche Bremsung beim Vorschieben des extrudierten Produktes (2) zu vermeiden.

4. Vorrichtung gemäss Patentanspruch 1, dadurch gekennzeichnet, dass der am Ausgang des Extrusionskopfes (1) angeordnet Deckel (1058) der Abkühlvorrichtung (1059) auf der inneren, longitudinalen Fläche (1057) longitudinale Vorsprünge (1060, 1061, 1062) aufweist, die zwischen parallelen Kanälen (949, 950, 951) gelegen sind, die nahe bei dem Eingang (1067) der Abkühlvorrichtung (1059) beginnen und zum Ausgang (1068) hin zusehends grösser werden.

5. Vorrichtung gemäss Patentanspruch 1, dadurch gekennzeichnet, dass die Satellitenstempel (6, 7) auf mindestens einem konzentrischen Kreis (524) bezüglich des zentralen Stempels (4) und des Mundstücks (3), aber näher bei dem zentralen Stempel (4) angeordnet sind.

6. Vorrichtung gemäss Patentanspruch 1, dadurch gekennzeichnet, dass der zentrale Stempel (4) Rillen aufweist, die mit exzentrischen Satellitenstempeln (6, 7) zusammenwirken, um auf dem inneren Umfang (526) des extrudierten Produktes (502) hohle longitudinale Wölbungen (529, 530) zu erhalten, die bezügliche des besagten inneren Umfangs (526) vorstehen.

7. Vorrichtung gemäss Patentanspruch 1, dadurch gekennzeichnet, dass die Satellitenstempel (6, 7) auf mindestens einem konzentrischen Kreis (624) bezüglich des zentralen Stempels (4) und des Mundstücks (3), aber näher bei dem Mundstück (3) angeordnet sind.

8. Vorrichtung gemäss Patentanspruch 1, dadurch gekennzeichnet, dass das Mundstück (3) Rillen aufweist, die mit den exzentrischen Satellitenstempeln (6, 7) zusammenwirken, um auf dem äusseren Umfang (625) des extrudierten Produktes (602) die longitudinalen elastischen Riefen (633, 634) zu erhalten.

9. Hohlprofile und dergleichen aus Kunststoff, insbesondere Polypropylen, erhalten durch Extrusion mit Hilfe der Vorrichtung gemäss einem der Patentansprüche 1 bis 3, dadurch gekennzeichnet, dass sie mehrere parallele, röhrenförmige Elemente (839, 840, 841) umfassen, die untereinander zur Verwirklichung einer Tafel durch nachgiebige Zungen verbunden sind, die Scharniere (842, 843, 844) bilden.

10. Hohlprofile und dergleichen aus Kunststoff, insbesondere Polypropylen, erhalten durch Extrusion mit Hilfe der Vorrichtung gemäss einem Patentansprüche 1 bis 4, dadurch gekennzeichnet, dass die eine Wand (1070) mit parallelen Kanälen (949, 950, 951) aufweisen, die in einer Ebene angeordnet sind, und ass die Zungen (1054, 1055) dieser Wand (1070), die zwischen diesen parallelen Kanälen (949, 950, 951) gelegen sind, die Scharniere bilden.

11. Hohlprofile und dergleichen gemäss Patentanspruch 10, dadurch gekennzeichnet, dass die Scharniere (952, 953) Öffnungen (954, 955) aufweisen, um die Luft und/oder das Licht hindurchzulassen oder nicht hindurchzulassen, je nachdem, ob die Scharniere (952, 953) geöffnet oder geschlossen sind.

12. Hohlprofile und dergleichen gemäss Patentanspruch 10, dadurch gekennzeichnet, dass die Tafel eine Monoblock-Tafel ist, deren parallele röhrenförmige Elemente (949, 950, 951) untereinander durch Scharniere (952, 953) aus dem gleichen Kunststoff verbunden sind, wobei die Monoblok-Tafel durch Extrusion und anschliessende V-förmige Reckung der Scharniere (952, 953) erhalten wird.

# FIG. 1

## FIG. 2

## FIG. 3

## FIG. 4

## FIG. 5

## FIG. 6

## FIG. 7

0 010 490

# FIG. 8

737
735
736

# FIG. 9

846
847
838
842
839
843
840
844
841
845

# FIG. 10

949
952
954
950
948
953
955
951

3

FIG.12  FIG.11

FIG. 13

FIG.14

FIG.15

FIG.16